## Europäisches Patentamt

## European Patent Office

## Office européen des brevets

(19)

(11) Veröffentlichungsnummer : **0 451 355 B1**

(12)

# EUROPÄISCHE PATENTSCHRIFT

(45) Veröffentlichungstag der Patentschrift :
**21.04.93 Patentblatt 93/16**

(51) Int. Cl.$^5$ : **G01F 1/66**

(21) Anmeldenummer : **90124417.8**

(22) Anmeldetag : **17.12.90**

(54) **Messwertgeber zur Bestimmung der Durchflussmenge einer strömenden Flüssigkeit.**

(30) Priorität : **10.04.90 CH 1218/90**

(43) Veröffentlichungstag der Anmeldung :
**16.10.91 Patentblatt 91/42**

(45) Bekanntmachung des Hinweises auf die
Patenterteilung :
**21.04.93 Patentblatt 93/16**

(84) Benannte Vertragsstaaten :
**AT BE CH DE DK FR GB IT LI LU NL SE**

(56) Entgegenhaltungen :
**EP-A- 0 088 235**
**EP-A- 0 249 689**
**FR-A- 2 369 566**
**US-A- 4 140 012**

(73) Patentinhaber : **Landis & Gyr Betriebs AG**
**CH-6301 Zug (CH)**

(72) Erfinder : **Hauenstein, Günther**
**Luisantring 92**
**W-6457 Maintal (DE)**

(74) Vertreter : **Müller, Hans-Jürgen, Dipl.-Ing. et al**
**Müller, Schupfner & Gauger**
**Maximilianstrasse 6 Postfach 10 11 61**
**W-8000 München 1 (DE)**

EP 0 451 355 B1

## Beschreibung

Die Erfindung bezieht sich auf einen Messwertgeber der im Oberbegriff des Anspruchs 1 genannten Art und einen Verfahren der im Oberbegriff des Anspruchs 10 gennanten Art.

Messwertgeber dieser Art eignen sich beispielsweise zur Bestimmung der in einer strömenden Flüssigkeit transportierten Wärmemenge, wobei die Durchflussmenge mittels Ultraschall gemessen wird.

Ein Messwertgeber der im Oberbegriff des Anspruchs 1 genannten Art ist aus der EP 088 235 A1 bekannt, dessen Messrohr als Wellenleiter mit konstantem Querschnitt ausgebildet ist, das eine den Ultraschall reflektierende Innenwand aufweist. Das Messrohr ist akustisch vom Gehäuse des Messwertgebers entkoppelt.

Es ist auch bekannt (EP 152 132 A1), dass die Ultraschall-Erzeuger seitliche Strahlungskeulen aufweisen, die unter einem grossen Winkel abgestrahlt werden.

In der EP 249 689 A1 werden auf das Messrohr aufgesteckte trichterförmige sich gegen die Messwandler öffnende Blenden zum Abschwächen der ausserhalb des Messrohres in den Aussenraum abgestrahlten und dort reflektierten Ultraschallwellen gezeigt.

Aus der französischen Publikation FR 2 369 566 ist zu entnehmen, wie ein mit einem Ultraschall absorbierenden Belag ausgekleidetes Messrohr zu bemessen ist, wobei der Abstand der beiden einander gegenüberliegenden Ultraschallwandler etwa 333 Wellenlängen des Ultraschalls in der Flüssigkeit beträgt und der Innendurchmesser des Messrohrs ein Mass von 11 Wellenlängen aufweist.

Die US-A-4 140 012 beschreibt einen Meßwertgeber mit einem Signalweg für Ultraschall senkrecht zur Achse der Zuleitungsrohre; dabei beträgt die Meßrohrlänge unabhängig vom Querschnitt der Zuleitungsrohre 100 bis 130 mm.

Das Uebertragungsverhalten für Ultraschall in diesen Messrohren ist von den Oberflächeneigenschaften und dem Material der Innenwand abhängig.

Der Erfindung liegt die Aufgabe zugrunde, einen Messwertgeber der im Oberbegriff des Anspruchs 1 genannten Art zu schaffen, dessen Messrohr ein von Oberflächeneigenschaften und vom Material seiner Innenwand unabhängiges Uebertragungsverhalten für Ultraschall aufweist.

Die genannte Aufgabe wird erfindungsgemäss durch die Merkmale der Ansprüche 1 und 10 gelöst. Vorteilhafte Ausgestaltungen ergeben sich aus den Unteransprüchen.

Nachfolgend werden Ausführungsbeispiele der Erfindung anhand der Zeichnungen näher erläutert.

Es zeigt:

Figur 1    einen Messwertgeber im Querschnitt,
Figur 2    einen Wellenleiter für Ultraschall,
Figur 3    die Intensitätsverteilung des Ultraschalls am Rohreingang des Wellenleiters und
Figur 4    die Intensitätsverteilung des Ultraschalls an einer Reflexionsstelle des Wellenleiters.

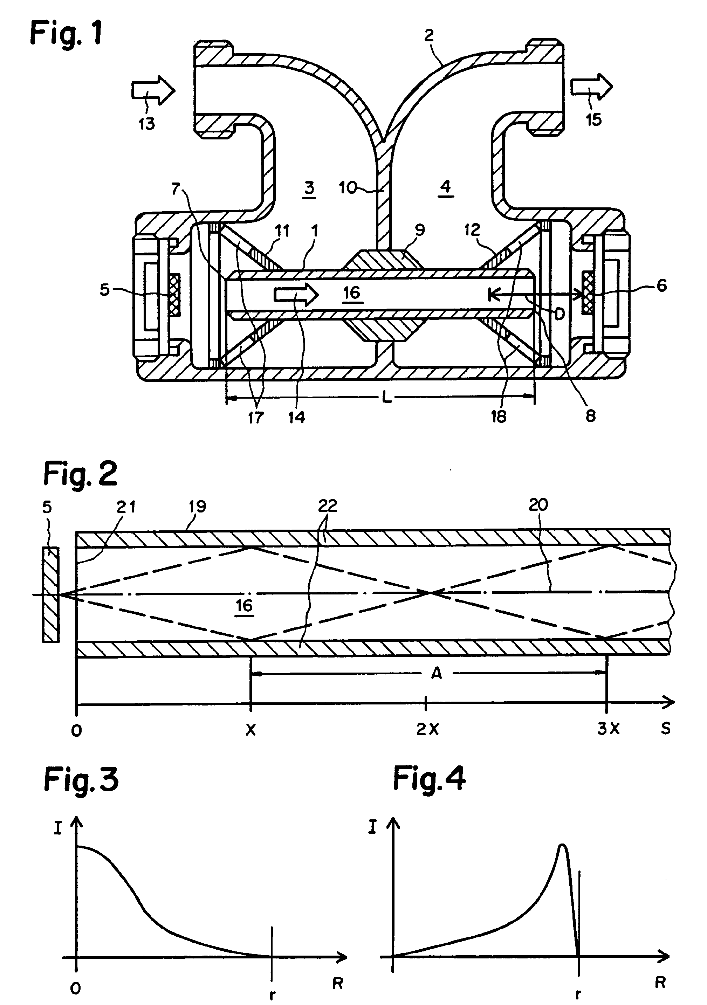

In der Figur 1 bedeutet 1 ein Messrohr in einem Gehäuse 2 eines Messwertgebers. Das gerade gestreckte Messrohr 1 von vorbestimmter Länge L verbindet hydraulisch zwei Verteilkammern, eine Vorkammer 3 und eine Sammelkammer 4, des Gehäuses 2, und ist zwischen zwei scheibenförmigen Messwandlern 5 und 6 für Ultraschall angeordnet, deren Senkrechte auf das Zentrum der Messwandler 5 und 6 mit der Messrohrachse zusammenfallen, die in der Zeichnung in der Darstellungsebene liegt. Das Messrohr 1 weist einen konstanten Innenquerschnitt und eine gleichförmige Wandstärke aus einem Ultraschall reflektierenden Material auf, wie Rotguss, Messing, nichtrostender Stahl usw.. An den beiden äussersten Enden nimmt die Wandstärke des Messrohrs 1 durch eine konusförmige Anschrägung ab und bildet vorzugsweise eine Stirnkante 7 bzw. 8, um Reflexionen von Ultraschall in den Messwandler 5 bzw. 6 zurück zu vermeiden und um eine Schallführung in der Wand des Messrohres 1 zwischen den Messwandlern 5, 6 zu unterdrücken.

Das Messrohr 1 ist mittels einer Tülle 9 hydraulisch dicht in eine Trennwand 10 des Gehäuses 2 zwischen der Vorkammer 3 und der Sammelkammer 4 eingesetzt.

Auf beiden Enden des Messrohrs 1 sind vorteilhaft je eine z. B. axialsymmetrische Blende 11 und 12 aufgesteckt, die zum Messrohr 1 koaxial sind und die die Achse des Messrohrs 1 genau auf das Zentrum der Messwandler 5, 6 ausrichten. Die Blenden 11 und 12 stützen sich mit einem sie begrenzenden äusseren Endring oder mittels Stützfinger auf die Innenwand des Gehäuses 2 ab.

Mit Vorteil bestehen die Blenden 11, 12 aus einem Ultraschall reflektierenden Kunststoff, beispielsweise einem PVDF-Material, das sich formgenau spritzen lässt. Die Blenden 11 und 12 weisen vorzugsweise die Form eines Trichters oder einer Glocke auf, die sich gegen den Messwandler 5 bzw. 6 hin öffnet, wobei der Oeffnungswinkel zwischen ihren Flächen und ihrer Achse im Bereich von 20° bis 60° liegt.

Eine Flüssigkeit, deren Durchflussmenge in einem hier nicht gezeigten Rohrsystem zu messen ist, strömt in einer durch Pfeile 13 bis 15 angedeutete Richtung durch das Gehäuse 2 des Messwertgebers, wobei sie von einer hier nicht gezeigten Zuleitung gespeist die Vorkammer 3 füllt, eine Flüssigkeitssäule 16 bildend durch das Messrohr 1 in die Sammelkammer 4 fliesst und von dort von einer hier nicht gezeigten Ableitung über-

2

nommen wird.

Die Blenden 11 und 12 weisen vorteilhaft Oeffnungen 17 und 18 auf, damit die Blenden nicht durch plötzlich auftretende Druckstösse im Rohrsystem beschädigt oder aus ihrer Lage geschoben werden können.

Fliesst die Flüssigkeit von der Vorkammer 3 nur durch die Oeffnungen 17 hindurch zum Messrohr 1 und gelangt sie vom Messrohr 1 nur durch die Oeffnungen 18 hindurch in die Sammelkammer 4, ermöglicht diese Anordnung der Blenden 11, 12 im Gehäuse 2 eine für den Einbau ins Rohrsystem vorteilhafte Verkürzung der zwischen den Pfeilen 13 und 15 notwendigen Einbaulänge des Gehäuses 2.

Die Oeffnungen 17 und 18 leiten die Strömung der Flüssigkeit radial zum Messrohr 1 oder von ihm weg. Die Oeffnungen 17, 18 beider Blenden 11, 12 sind mit Vorteil aufeinander ausgerichtet, damit eine schraubenförmige Drehung der Flüssigkeitssäule 16 im Messrohr 1 längs der Messrohrachse unterdrückt ist und ein durch diese Drehung verursachter zusätzlichen Druckabfall im Messrohr 1 vermieden wird.

Die Messwandler 5 und 6 senden beispielsweise periodisch während einer Sendephase gleichzeitig ein Paket von N Schwingungen der Ultraschallwellen aus. Nach der Sendephase ist der Messwandler 5 bzw. 6 erst nach einer Wartezeit von N/4 Schwingungen während N/2 Schwingungen auf Empfang geschaltet, um einen vorbestimmten Ausschnitt aus dem durch das Messrohr 1 geleiteten Paket von Ultraschallwellen, das vom anderen Messwandler 6 bzw. 5 ausgesandt worden ist, in ein elektrisches Signal zu wandeln und einer hier nicht gezeigten Auswerteschaltung zuzuführen.

Der vom Messwandler 5 bzw. 6 neben das Messrohr 1 abgestrahlte Ultraschall wird von jeder Blende 11 bzw. 12 beim Auftreffen auf dieser wenigstens teilweise reflektiert oder dringt durch die Oeffnungen 17 bzw. 18 in die Vorkammer 3 bzw. in die Sammelkammer 4 vor. Bei der Reflexion an der Blende 11 bzw. 12 gelangt ein Teil des Ultraschalls zum Messwandler 5 bzw. 6 zurück, der andere Teil läuft sich nach mehreren Reflexionen zwischen der Blende 11 bzw. 12 und der Aussenwand des Messrohres 1 tot.

Mit Vorteil sind die Blenden 11 und 12 in einer vorbestimmten Distanz D derart vor den Messwandlern 5, 6 angeordnet, dass die N-te, d. h. die letzte während der vorangegangenen Sendephase ausgestrahlte Schwingung des Ultraschalls nach einer Reflexion an der Blende 11 bzw. 12 noch während der Wartezeit beim gleichen Messwandler 5 bzw. 6 wieder eintrifft.

Die Distanz D zwischen dem Aufsetzort der Blende 11 und 12 und dem Messwandler 5 bzw. 6 ist kleiner als die Hälfte der Strecke, die die reflektierte N-te Schwingung während der Wartezeit zurücklegen kann, bevor der Messwandler 5 bzw. 6 auf Empfang geschaltet ist. Sie ist daher von der Wellenlänge W der Ultraschallwellen abhängig. Im obigen Beispiel ist die Distanz D kleiner als N/8 Wellenlängen W, also

$$D = W \cdot N/8.$$

In einem Beispiel beträgt die Länge des während der Sendephase ausgesandten Paketes 128 Schwingungen der Ultraschallwellen und die Wellenlänge W des verwendeten Ultraschalls 1,5 mm. Die Distanz D ist daher kleiner als 24 mm.

Zur Bestimmung des Uebertragungsverhaltens des Messrohres 1 ist die in der Figur 2 gezeigte beispielhafte Anordnung des Messwandlers 5 vor einem langen, offenen Rohr 19 verwendbar, die beide in die Flüssigkeit eingetaucht sind. Der Messwandler 5 sendet Ultraschall in die Flüssigkeitssäule 16, die von der Innenwand des Rohres 19 begrenzt ist. Die leicht divergenten Ultraschallwellen werden jeweils beim Auftreffen an der Innenwand reflektiert und interferieren in der Flüssigkeitssäule 16 untereinander, d. h. das Rohr 19 wirkt als Wellenleiter. Der Schalldruck I ist daher im Rohr 19 eine Funktion des Radius R von der Rohrachse 20 und der von einem Rohreingang 21 gemessenen Wegstrecke S und bildet in der Flüssigkeitssäule 16 ein von der Wellenlänge W, dem Innenradius r und dem Material der Rohrwand 22 abhängiges axialsymmetrisches Interferenzmuster aus.

Der auf der Rohrachse 20 gemessene Schalldruck I nimmt auf der Wegstrecke S nach einem Wegabschnitt x auf ein erstes Minimum ab und steigt danach wieder bei S = 2·x auf ein erstes Maximum an, um erneut bei S = 3·x auf ein zweites Minimum abzusinken und bei S = 4·x auf ein zweites hier nicht gezeigtes Maximum anzusteigen usw.. Alle Minima einerseits und alle Maxima andererseits weisen untereinander einen gleichen Abstand von 2·x auf.

Am Rohreingang 21 und in jedem Maximum nimmt der Schalldruck I von der Rohrachse 20 bei R = 0 in Richtung des Radius R bis zur Rohrwand 22 bei R = r ab. Die Figur 3 zeigt eine beispielhafte Verteilung des Schalldrucks I bei S = 0, 2·x, 4·x usw., wo sich der Schalldruck I auf der Rohrachse 20 konzentriert.

In jedem Minimum auf der Rohrachse 20 bei R = 0 hingegen erreicht der Schalldruck I mit einer in der Figur 4 gezeigten Verteilung hohe Werte in der Nähe der Rohrwand 22 bei R = r. Ein überwiegender Teil der Ultraschallwellen trifft an Reflexionsstellen bei S = x, 3·x usw. auf die Innenwand des Rohres 19 auf und wird zur Rohrachse 20 reflektiert. Die Reflexionstellen folgen sich im Rohr 19 in gleichem Abstand, der durch die doppelte Wegstrecke x bestimmt ist. Nach einer weiteren Wegstrecke x konzentrieren sich die Ultraschallwellen erneut auf der Rohrachse 20 und erzeugen dort das nächste Maximum des Schalldrucks I.

Eine nur vom Material des Rohres 19 abhängige Kennzahl K berechnet sich aus dem Quadrat des Innen-

EP 0 451 355 B1

radius r des Rohres 19, dem Zweifachen der experimentell bestimmten Wegstrecke x und der Wellenlänge W zu

$$K = 2 \cdot x \cdot W / r^2.$$

Die Kennzahl K charakterisiert das Rohr 19 als Wellenleiter für Ultraschall unabhängig von seinem Innenradius r und der Wellenlänge W. Die Kennzahl K dient, wie nachstehend gezeigt, als Grundlage für die Bemessung des Messrohres 1 (Figur 1).

Beispielsweise weist die Kennzahl K eines Rohres 19 aus rostfreien Stahl einen Wert von K = 4,67 auf. Für Messing beträgt die Kennzahl K = 2,33.

Mit Hilfe der experimentell bestimmten Kennzahl K ist ein Reflexionsabstand A zu

$$A = K \cdot (R_M)^2 / W$$

berechenbar, wobei der Innenradius $R_M$ des Messrohres 1 und die Wellenlänge W der bestimmten Ausführung des Messwertgebers einzusetzen sind. Der Innenradius $R_M$ ist aufgrund der hydraulischen Anforderungen an das Messrohr 1 frei wählbar.

Ist in der Figur 1 die Länge L des Messrohres 1 kürzer als der halbe Reflexionsabstand A (Figur 2) ausgebildet, wirkt das Messrohr nicht mehr als Wellenleiter, da der überwiegende Teil der Ultraschallwellen beim Durchgang durch das Messrohr 1 noch keine Reflexion an seiner Innenwand erfährt.

Der Vorteil dieser Anordnung besteht darin, dass der Schalldruck I an den auf Empfang geschalteten Messwandlern 5 und 6 vom Reflexionsvermögen der Innenwand des Messrohrs 1 unabhängig ist und dass sich eine allfällige, während der Betriebszeit durch Korrosion oder durch Ablagerungen irgendwelcher Art bewirkte Verschlechterung des Reflexionsvermögens nicht auf das Uebertragungsverhalten des Messrohres 1 auswirkt, die die Funktionsfähigkeit oder die Genauigkeit des Messwertgebers beeinträchtigt.

In einer vorteilhaften Ausführung des Messwertgeber beträgt die Länge L des Messrohres 1 genau ein Viertel des für das Messrohr 1 berechneten Reflexionsabstandes A, da sich am Ausgang des Messrohres 1 mit der Länge L = 0,25·A die Verteilung des Schalldrucks I beim Empfang am Messwandler 5, 6 nur unwesentlich von der in der Figur 3 gezeigten unterscheidet, d. h. die empfindliche Fläche der Messwandler 5, 6 ist gut ausgenützt, und andererseits weisen die Ultraschallwellen eine für die Genauigkeit der Messung genügend lange Laufzeit in der Flüssigkeitssäule 16 auf.

Ist am Beispiel des rostfreien Stahls mit der Kennzahl K = 4,67 der Innenradius $R_M$ durch hydraulische Anforderungen auf $R_M$ = 8 mm festgelegt und beträgt in der Flüssigkeit die Wellenlänge W = 1,5 mm, berechnet sich die Länge L des Messrohres 1 zu

$$L = 0{,}25 \cdot A = 0{,}25 \cdot K \cdot (R_M)^2 / W = 49{,}8 \text{ mm}.$$

Die Messwandler 5, 6 beschallen die Rohrwand 22 (Figur 2) des Messrohres 1 von der Länge L = 0,25·A, wie oben dargelegt, nur geringfügig. Die Tülle 9 weist daher ausser der hydraulischen Abdichtung zwischen den Verteilkammern 3, 4 keine zusätzliche Funktion auf, wie dies beim Stand der Technik als akustische Entkopplung zum Gehäuse 2 nötig ist.

Das Messrohr 1 weist in der obigen Beschreibung beispielhaft einen kreisförmigen Querschnitt auf. Der Erfindungsgedanke ist für den Fachmann auch auf Messrohre 1 mit einem quadratischen oder mit einem rechteckigen Querschnitt erweiterbar.

**Patentansprüche**

1. Messwertgeber zur Bestimmung der Durchflussmenge einer durch ein Rohrsystem strömenden Flüssigkeit durch Messung der Laufzeit von Ultraschall innerhalb der in einem Ultraschall reflektierenden Messrohr (1) mit konstantem Querschnitt strömenden Flüssigkeit, mit zwei mit der Flüssigkeit in Berührung stehenden, auf der Mittelachse des Messrohres einander gegenüberstehenden Messwandlern (5; 6), von denen je ein Messwandler (5 bzw. 6) in je einer von zwei einzig durch das Messrohr (1) miteinander verbundenen Verteilkammern (3; 4) in einem Gehäuse (2) in einem Abstand von den freien Enden des Messrohrs (1) angeordnet ist, dadurch gekennzeichnet, dass die Länge L des Messrohres (1) kürzer als $K \cdot (R_M)^2 / 2 \cdot W$ ist, mit $R_M$ als Innenradius des Messrohres (1) wobei K unter Verwendung der Schritte

a. Beschallen eines mit Flüssigkeit gefüllten und beidseitig offenen Rohres (19), das aus dem Material des Messrohrs besteht und das den gleichen Querschnitt wie das Messrohr (1) hat, mit Ultraschallwellen der Wellenlänge W, so dass sich in der Flüssigkeitssäule (16) im Rohr (19) ein von der Wellenlänge W, dem Innenradius r und dem Material der Rohrwand (22) abhängiges axialsymmetrisches Interferenzmuster ausbildet,

b. Messen des Schalldrucks (I) auf der Rohrachse (20) des Rohres (19) als Funktion der von einem dem Messwandler (5) zugewandten Rohrende (21) des Rohres (19) aus gemessenen Wegstrecke (s),

c. Messen des Abstandes A aufeinanderfolgender Maxima des ermittelten Schalldrucks, und

4

d. Bestimmen der Kennzahl K = A·W·r⁻². erhalten wird.

2. Meßwertgeber nach Anspruch 1,
**dadurch gekennzeichnet,**
daß die Länge (L) gleich einem Viertel des Reflexionsabstands (A) ist.

3. Meßwertgeber nach Anspruch 1 oder 2,
**dadurch gekennzeichnet,**
daß das Meßrohr (1) auf beiden Enden aufgesteckte Blenden (11; 12) aufweist und daß die Blenden (11; 12) das Meßrohr (1) im Gehäuse (2) auf die Meßwandler (5; 6) zentrieren.

4. Meßwertgeber nach Anspruch 3,
**dadurch gekennzeichnet,**
daß die Blende (11 bzw. 12) eine sich gegen den Meßwandler (5 bzw. 6) öffnende Glocken- oder Trichterform aufweist.

5. Meßwertgeber nach Anspruch 3 oder 4,
**dadurch gekennzeichnet,**
daß die Blende (11 bzw. 12) eine vorbestimmte Distanz (D) zum benachbarten Meßwandler (5 bzw. 6) aufweist.

6. Meßwertgeber nach Anspruch 5,
**dadurch gekennzeichnet,**
daß ein von den Meßwandlern (5; 6) während einer Sendephase ausgesandtes Paket N Schwingungen der Ultraschallwellen mit einer Wellenlänge (W) umfaßt, daß nach der Sendephase die Meßwandler (5; 6) erst nach einer Wartezeit von N/4 Schwingungen als Empfänger aktiv sind und daß die Distanz (D) weniger als N/8 Wellenlängen (W) beträgt.

7. Meßwertgeber nach einem der Ansprüche 3-6,
**dadurch gekennzeichnet,**
daß die Blenden (11; 12) aus einem Ultraschall reflektierendem Material bestehen.

8. Meßwertgeber nach einem der Ansprüche 3-7,
**dadurch gekennzeichnet,**
daß die Blenden (11; 12) Öffnungen (17; 18) aufweisen.

9. Meßwertgeber nach Anspruch 8,
**dadurch gekennzeichnet,**
daß die Öffnungen (17; 18) die Blenden (11; 12) zur Unterdrückung einer schraubenartigen Drehung der Flüssigkeitssäule (16) im Meßrohr auf der Zuflußseite zum Meßrohr (1) und auf der Abflußseite vom Meßrohr angeordnet und aufeinander ausgerichtet sind, wobei die Flüssigkeit durch die Öffnungen (17; 18) hindurchströmt.

10. Verfahren zur Bestimmung der Durchflussmenge einer durch ein Rohrsystem strömenden Flüssigkeit durch Messen der Laufzeit von Ultraschall innerhalb der in einem Ultraschall reflektierenden Messrohr (1) mit konstantem Querschnitt strömenden Flüssigkeit, mit zwei mit der Flüssigkeit in Berührung stehenden, auf der Mittelachse des Messrohres einander gegenüberstehenden Messwandlern (5; 6), von denen je ein Messwandler (5 bzw. 6) in je einer von zwei einzig durch das Messrohr (1) miteinander verbundenen Verteilkammern (3; 4) in einem Gehäuse (2) in einem Abstand von den freien Enden des Messrohrs (1) angeordnet ist, wobei das Verfahren aus folgenden Schritten besteht:
(i) Bestimmung einer nur vom Material des Messrohres (1) abhängigen Kennzahl K durch:
a. Beschallen eines mit Flüssigkeit gefüllten und beidseitig offenen Rohres (19), das aus dem Material des Messrohrs besteht und das den gleichen Querschnitt wie das Messrohr (1) hat, mit Ultraschallwellen der Wellenlänge W, so dass sich in der Flüssigkeitssäule (16) im Rohr (19) ein von der Wellenlänge W, dem Innenradius r und dem Material der Rohrwand (22) abhängiges axialsymmetrisches Interferenzmuster ausbildet,
b. Messen des Schalldrucks (I) auf der Rohrachse (20) des Rohres (19) als Funktion der von einem dem Messwandler (5) zugewandten Rohrende (21) des Rohres (19) aus gemessenen Wegstrecke

5

(s),

c. Messen des Abstandes A aufeinanderfolgender Maxima des ermittelten Schalldrucks, und

d. Bestimmen der Kennzahl $K = A \cdot W \cdot r^{-2}$.

(ii) Messung der Durchflussmenge unter Verwendung eines Messrohres mit einer Länge L kürzer als $K \cdot (R_M)^2 / 2 \cdot W$, mit $R_M$ als Innenradius des Messrohres

## Claims

1. A sensor for determining the quantitative flow rate of a fluid flowing through a pipe system by measurement of the transit time of ultrasound within the fluid flowing in an ultrasound-reflecting measuring tube (1) of constant cross-section, comprising two measuring transducers (5; 6) which are in contact with the fluid and which are in mutually opposite relationship on the centre line of the measuring tube and of which a respective measuring transducer (5 and 6) is arranged at a spacing from the respective free ends of the measuring tube (1) in a respective one of two distribution chambers (3; 4) which are solely connected together by the measuring tube (1) in a housing (2), characterised in that the length L of the measuring tube (1) is shorter than $K \cdot (R_M)^2 / 2 \cdot W$, with $R_M$ as the inside radius of the measuring tube (1), wherein K is determined using the following steps:

   a) irradiating a tube (19) which is filled with fluid and which is open at both ends and which comprises the material of the measuring tube and which is of the same cross-section as the measuring tube (1) with ultrasonic waves of the wavelength W so that an axially symmetrical interference pattern which is dependent on the wavelength W, the inside radius r and the material of the tube wall (22) is formed in the fluid column (16) in the tube (19),

   b) measuring the acoustic pressure (I) on the tube axis (20) of the tube (19) as a function of the distance (S) measured from an end (21) of the tube (19), which is towards the measuring transducer (5),

   c) measuring the spacing A of successive maxima of the acoustic pressure ascertained, and

   d) determining the index number $K = A \cdot W \cdot r^{-2}$.

2. A sensor according to claim 1 characterised in that the length (L) is equal to a quarter of the reflection spacing (A).

3. A sensor according to claim 1 or claim 2 characterised in that the measuring tube (1) has shields (11; 12) which are fitted onto both ends and that the shields (11; 12) centre the measuring tube (1) in the housing (2) in relation to the measuring transducers (5; 6).

4. A sensor according to claim 3 characterised in that the shield (11 or 12) is of a bell or funnel shape which opens towards the respective measuring transducer (5, 6).

5. A sensor according to claim 3 or claim 4 characterised in that the shield (11 or 12) is at a predetermined distance (D) relative to the adjacent measuring transducer (5, 6).

6. A sensor according to claim 5 characterised in that a pack which is emitted by the measuring transducers (5; 6) during a transmission phase includes N oscillations of the ultrasonic waves of a wavelength (W), that after the transmission phase the measuring transducers (5; 6) are active as receivers only after a waiting time of N/4 oscillations, and that the distance (D) is less than N/8 wavelengths (W).

7. A sensor according to one of claims 3 to 6 characterised in that the shields (11; 12) comprise an ultrasound-reflecting material.

8. A sensor according to one of claims 3 to 7 characterised in that the shields (11; 12) have openings (17; 18).

9. A sensor according to claim 8 characterised in that the openings (17; 18) in the shields (11; 12) are arranged and aligned relative to each other to suppress a helical rotation of the fluid column (16) in the measuring tube on the feed flow side to the measuring tube (1) and on the discharge flow side from the measuring tube, the fluid flowing through the openings (17; 18).

10. A method of determining the quantitative flow rate of a fluid flowing through a pipe system by measuring the transit time of ultrasound within the fluid flowing in an ultrasound-reflecting measuring tube (1) of constant cross-section, comprising two measuring transducers (5; 6) which are in contact with the fluid and which are in mutually opposite relationship on the centre line of the measuring tube and of which a respective measuring transducer (5 and 6) is arranged at a spacing from the respective free ends of the measuring tube (1) in a respective one of two distribution chambers (3; 4) which are solely connected together by the measuring tube (1) in a housing (2), wherein the method comprises the following steps:

i) determining an index number K which is dependent only on the material of the measuring tube (1) by:

a) irradiating a tube (19) which is filled with fluid and which is open at both ends and which comprises the material of the measuring tube and which is of the same cross-section as the measuring tube (1) with ultrasonic waves of the wavelength W so that an axially symmetrical interference pattern which is dependent on the wavelength W, the inside radius r and the material of the tube wall (22) is formed in the fluid column (16) in the tube (19),

b) measuring the acoustic pressure (I) on the tube axis (20) of the tube (19) as a function of the distance (S) measured from an end (21) of the tube (19), which is towards the measuring transducer (5),

c) measuring the spacing A of successive maxima of the acoustic pressure ascertained, and

d) determining the index number $K = A \cdot W \cdot r^{-2}$, and

ii) measuring the quantitative flow rate using a measuring tube of a length L shorter than $K \cdot (R_M)^2 / 2 \cdot W$, with $R_M$ as the inside radius of the measuring tube.

**Revendications**

1. Capteur de mesure pour la détermination du débit d'un liquide circulant dans un système de tuyauterie par mesure du temps de propagation d'ultrasons à l'intérieur du liquide circulant dans un tube de mesure (1) réfléchissant l'ultrason et ayant une section constante, ledit capteur de mesure comprenant deux convertisseurs de mesure (5, 6) qui sont disposés face à face sur l'axe de symétrie du tube de mesure et qui sont en contact avec le liquide, chacun de ces convertisseurs de mesure (5 et 6) étant disposé dans l'une de deux chambres de distribution (3 ; 4) communiquant l'une avec l'autre uniquement par le tube de mesure (1) et situées dans un boîtier (2) à distance des extrémités libres du tube (1), caractérisé en ce que la longueur L du tube de mesure (1) est inférieure à $K.(R_M)^2/2.W$, $R_M$ étant le rayon intérieur du tube de mesure (1) et K se déterminant par les étapes suivantes :

a. envoi d'ondes ultrasonores de longueur d'onde W dans un tube (19) rempli de liquide, ouvert des deux côtés, réalisé en la matière du tube de mesure et ayant la même section que le tube de mesure (1), de manière qu'il se forme dans la colonne de liquide (16) se trouvant dans le tube (19) un réseau d'interférence symétrique par rapport à l'axe et fonction de la longueur d'onde W, du rayon intérieur r et de la matière de la paroi (22) du tube,

b. mesure de la pression acoustique (I) sur l'axe (20) du tube (19) en fonction d'un trajet s mesuré à partir de l'extrémité (21) du tube (19) tournée vers l'un des convertisseurs de mesure (5),

c. mesure de la distance A entre maxima successifs de la pression acoustique déterminée et

d. détermination du paramètre $K = A.W.r^{-2}$.

2. Capteur de mesure selon la revendication 1, caractérisé en ce que la longueur (L) est égale à un quart de la distance de réflexion (A).

3. Capteur de mesure selon la revendication 1 ou 2, caractérisé en ce que le tube de mesure (1) comporte des écrans (11 ; 12) rapportés sur lui aux deux extrémités et en ce que les écrans (11 ; 12) centrent le tube de mesure (1) à l'intérieur du boîtier (2) sur les convertisseurs de mesure (5 ; 6).

4. Capteur de mesure selon la revendication 3, caractérisé en ce que les écrans (11 ainsi que 12) ont une forme en cloche ou en trémie ouverte vers le convertisseur correspondant de mesure (5 ou 6).

5. Capteur de mesure selon la revendication 3 ou 4, caractérisé en ce que les écrans (11 et 12) sont à une distance prédéterminée (D) du convertisseur de mesure voisin (5 et 6).

6. Capteur de mesure selon la revendication 5, caractérisé en ce qu'un groupe d'oscillations émis par les convertisseurs de mesure (5 ; 6) pendant une phase d'émission comprend N oscillations des ondes ultrasonores d'une longueur d'onde W, en ce qu'à la fin d'une phase d'émission, les convertisseurs de mesure (5 ; 6) ne sont actifs en récepteurs qu'à la fin d'un temps d'attente de N/4 oscillations et en ce que la distance (D) est inférieure à N/8 longueurs d'onde (W).

7. Capteur de mesure selon l'une des revendications 3 à 6, caractérisé en ce que les écrans (11;12) sont en une matière réfléchissant les ultrasons.

8. Capteur de mesure selon l'une des revendications 3 - 7, caractérisé en ce que les écrans (11 ; 12) comportent des trous (17 ; 18).

9. Capteur de mesure selon la revendication 8, caractérisé en ce que les trous (17 ; 18) sont disposés dans les écrans (11 ; 12) sur le côté d'arrivée sur le tube de mesure (1) et sur le côté d'évacuation du tube de mesure de manière à inhiber une rotation hélicoïdale de la colonne de liquide (16) dans le tube de mesure et sont orientés les uns sur les autres, le liquide passant par les trous (17;18).

10. Procédé de détermination du débit d'un liquide circulant dans un système de conduits par la mesure du temps de propagation d'ultrasons à l'intérieur du liquide circulant dans un tube de mesure (1) réfléchissant les ultrasons et ayant une section constante, deux convertisseurs de mesure (5 ; 6) disposés face à face sur l'axe de symétrie du tube de mesure étant en contact avec le liquide, chacun de ces convertisseurs de mesure (5 et 6) étant disposé dans l'une de deux chambres de répartition (3 ; 4) communiquant l'une avec l'autre uniquement par le tube de mesure (1) et placées à distance des extrémités libres du tube de mesure (1) à l'intérieur d'un boîtier (2), le procédé consistant en les étapes suivantes :
   (i) détermination d'un paramètre K, qui n'est fonction que de la matière du tube de mesure (1) par :
      a. envoi d'ondes ultrasonores de longueur d'onde W dans un tube (19) rempli de liquide, ouvert des deux côtés, réalisé en la matière du tube de mesure et ayant la même section que le tube de mesure (1) de manière qu'il se forme dans la colonne de liquide (16) se trouvant dans le tube (19) un réseau d'interférence symétrique par rapport à l'axe et fonction de la longueur d'onde W, du rayon intérieur r et de la matière de la paroi du tube (22),
      b. mesure de la pression acoustique (I) sur l'axe (20) du tube (19) en fonction du trajet (s) mesuré à partir de l'extrémité (21) du tube (19) tournée vers le convertisseur de mesure (5),
      c. mesure de la distance A séparant des maxima successifs de la pression acoustique déterminée et
      d. détermination du paramètre $K = A.W.r^{-2}$.
   (ii) mesure du débit à l'aide d'un tube de mesure ayant une longueur L plus faible que $K.(R_M)^2/2.W$, $R_M$ étant le rayon intérieur du tube de mesure.

# Fig. 1

# Fig. 2

# Fig. 3

# Fig. 4